# EUROPEAN PATENT SPECIFICATION

(11) **EP 3 918 924 B1**
(45) Date of publication and mention of the grant of the patent: **27.11.2024**
(21) Application number: 21382438.6
(22) Date of filing: 12.05.2021
(51) Int. Cl.: A23L 17/50, A23L 17/00

(54) **PROCESS FOR PREPARATION OF MARINE SAUSAGES BASED ON CEPHALOPODS**
VERFAHREN ZUR HERSTELLUNG VON MEERESWÜRSTEN AUF DER BASIS VON CEPHALOPODEN
PROCÉDÉ DE PRÉPARATION DE SAUCISSES MARINES À BASE DE CÉPHALOPODES

(30) Priority: 04.06.2020 ES 202030525
(43) Date of publication of application: 08.12.2021
(73) Proprietor: Chinchilla Tamayo, Andoni, 20750 Zumaia (Guipúzcoa) (ES)
(72) Inventor: Chinchilla Tamayo, Andoni, 20750 Zumaia (Guipúzcoa) (ES)
(74) Representative: Clarke, Modet y Cía., S.L.

(56) References cited:
- CN-A- 101 496 617
- CN-A- 109 007 746
- KR-A- 20100 039 111
- KR-A- 20100 094 130
- KR-A- 20110 072 906
- KR-A- 20170 121 558

## Description

### Object of the invention

The object of the invention refers to a process for the preparation of marine sausages based on cephalopods, more specifically, octopus head and the sausage prepared by said process.

### Background of the invention

In the current state of the art different procedures are already known for the preparation of sausages or other products made from fish parts, such as those described in patent ES2021973, which describes the procedure of manufacture of a reconstituted product similar to cod loins.

At the international level there exist different patents that describe processes for manufacturing of products from fish derivatives such as patents KR20200044300, KR20200027309 or KR102081505 among others.

There also exist several patented products, especially in similar products of shellfish, and made from them, such as those described in patents GB1566230 or US4497844. KR20100039111A describes a squid octopus bar.

### Technical problem to be resolved

Within the food sector, a majority consider the raw material of sausages to be meat, normally pork.

Because of this, the processes for manufacture of the processed product in the meat sector have been developed exponentially, while the sector of the fishing industry has not undergone great development.

Currently, there exist very undervalued marine species or parts of marine species that are discarded as they are deemed to have little added value and therefore, they are not taken into account as a raw material.

The manufacture of processed product, such as sausages, also serves to maximize the utilization of raw material, a subject of which society is becoming increasingly aware.

### Description of the invention

The food industry and the end consumer, to date, have not considered at all the nutritional and culinary value provided by the cephalopod's head.

This part of the cephalopod contains a flavour and unequalled marine nuances, and it is also where the greatest content of collagen is concentrated. The use of the cephalopod's head as natural collagen for the preparation of sausages is one of the bases for the object of the invention.

The collagen content of the head of cephalopods, especially of the octopus, is around three times that of the content of other fish; thus, it is used as a main ingredient.

The products made with this main ingredient contain greater marine flavour and texture; being natural species they act as a natural preservative, with no need to use artificial preservatives, stabilizers, nitrates and colourants.

A vegetable fat is added to the prepared sausages, preferably EVOO (Extra Virgin Olive Oil).

EVOO possesses different properties; for example, and among others, is a natural antiinflammatory, prevents gastric acidity and promotes intestinal transit, is rich in polyphenols and oleocanthal, reduces the levels of blood cholesterol strengthens the immune system.

The vegetable fat provided in the process provides smoothness to the product.

To achieve the process, the addition of *colatura di alici* is necessary.

*Colatura di alici* is a sauce or liquid condiment obtained from the maturation of salted anchovies. The sauce is transparent and amber-coloured, and it is produced by fermenting the anchovies in a process similar to pickling.

The origin of *colatura di alici* goes back to ancient Rome; in that era a similar sauce was produced, called "garum" which was widely used.

Once the manufacturing process is finalized, the mixture is stuffed into intestinal casings, these casings can be of pigs, sheep or synthetic, the latter being the preferred option for the products to be commercialized in all markets without cultural or religious restrictions.

The products obtained from this process have the appearance and flavour of conventional sausages, but as they have the cephalopod's head as their main ingredient, they are healthier.

With these products obtained, an innovation is introduced with respect to conventional sausages in the market and diversification in food products.

In addition to obtaining products of high nutritional and culinary value that are within the reach of the majority of society, any possible existing qualms in the eating of cephalopods or possible cultural or religious restrictions relating to its consumption are eliminated.

### Description of the process

The process consists of the following phases:
1) The base ingredient of the product is octopus head in a quantity of over 90% in weight of the final sausage (94% and 97%) (its natural characteristics act as a natural preservative without having to use preservatives, stabilizers, nitrates and colourants); it is cooked for 50 minutes ±10 minutes.
2) Once the heads are cooked, they are put into a blast chiller, so that the resulting product lowers its temperature to between 0°C and 3°C; this step has a duration of between 30 and 60 minutes; with this step, the growth and proliferation of microorganisms and bacteria is prevented.
3) When the base ingredient has reached the optimal temperature (0°C-3°C) for its handling, it is crushed into different textures.
4) The process of crushing into three different textures is done at an optimal temperature of 2°C, this temperature being variable, ranging from 0°C to 4°C.
   This process of crushing is done with cutting machines that allow irregular cuts of three differentiated sizes, the results of the cuts range from 1-2mm for the first texture, 4-5mm for the second texture and 5-6 mm for the third. These textures are necessary to obtain the consistency and authenticity of a sausage.
5) Once the base ingredient has been obtained in the three textures, we add the rest of the main ingredients; salt (between 0.4% and 0.95%), vegetable fat, preferably EVOO (between 1.5% and 2.3%) and *colatura di alici* (between 1.5% and 2.3%).
   To obtain derivatives of the product with authenticity and similarity to conventional sausages, a series of secondary ingredients are introduced such as;
   - For a first derivative with an appearance and consistency similar to sweet chorizo sausage, in addition to the main ingredients described above, sweet paprika (between 10g and 14g) is added for each 500g of octopus head,
   - For a second derivative similar to spicy chorizo sausage, hot paprika (between 3g y 6g) and sweet paprika (between 5g and 9g) are added to the main ingredients for every 500g of octopus head;
   - For a third derivative where its appearance and consistency are similar to salchichon sausage, Sichuan pepper (between 6g and 11g) is added to the main ingredients for every 500g of octopus head;
6) Once the mixture is obtained, an amalgam is made of the mass by hand for 10-20 minutes, the working temperature being between 0°C and 4°C, to prevent the appearance of microorganisms that cause the rotting of the cephalopod.
7) Once the resulting mass of all the ingredients is amalgamated, it undergoes the stabilization process.
   This process has a working temperature of between 0°C and 4°C, necessary to prevent risks of contamination in the product, bacteria, pathogens or odours; and a duration of between 10 and 14 hours.
   The stabilization is necessary in order for the resulting mass to rest and impregnate the proteins of the octopus head with the rest of the ingredients.
8) After the stabilization process, the product is then stuffed into pig or sheep intestinal casings or synthetic casing.

Once the process is finalized, depending on the end product to be obtained, different thermal cycles are carried out, detailed below in the following examples;

### Examples:

### Example1: Unpasteurized product

This final product is designated for direct sale or to deep-frozen products as the shelf life of the product is very short.

Following the aforementioned process, after step 8, the product receives a treatment of cold in a chamber with a working temperature of between 2.8°C and 3.1 C; with a relative humidity of 60%±, for at least 24-36 hours.

Finally, it is vacuum-packed, thus finishing the process for its direct sale.

### Example2: Pasteurized product

Following the aforementioned process, after step 8, the product undergoes a process of pasteurization at 85°C ± 2°C for 1.5 hours to 2 hours to subsequently cool rapidly at a temperature between 0°C and 3°C; this operation is performed with a blast chiller.

### Example3: Cured product

Following the process after step 8, the product is put into a chamber between 7 days and 14 days, with a variable temperature between -2.8°C and -3.1°C and a relative humidity of 65% (± 5%), obtaining drying at a negative temperature and thus slowing the growth of bacteria in the product so that the product does not start to rot.

Finally, it is packed and it will be prepared for commercialization.

### Example4: Smoked product

Following the process, after step 8, and starting with the unpasteurized product, it is smoked when cold, with a digital smoker, with apple wood at a temperature between 6°C and 15°C for a period of 10 to 16 hours; giving it different nuances and bacteriologically a longer useful life thanks to the inhibitors contained by the smoke.

## Claims

1. Process for preparation of marine sausages **characterized in that** the process comprises the following steps:
a) cooking octopus' heads between 40 and 60 minutes;
b) lower the temperature of the cooked octopus' heads between 0 and 3°C for 40 to 60 minutes;
c) crushing the octopus' heads of step b) at a temperature of between 0°C and 4°C;
d) adding salt, vegetable fat and *colatura di alici* to the crushed heads and amalgamate the mixture between 10 and 30 minutes at a temperature between 0°C and 4°C;
e) stabilizing the amalgamated mass of step d) at a temperature between 0°C and 4ºC for a time between 10 and 14 hours; and
f) stuffing the amalgamated mass of step e) into a casing;
wherein the quantity of octopus' heads in the marine sausage is greater than 90% in weight of the final sausage.

2. Process according to claim 1, **characterized in that** the ingredients in step d) consists of octopus' heads between 94 % to 97 %, vegetable fat between 1.5 % and 2.3 %, *colatura di alici* between 1.5 % and 2.3 %, and salt between 0.4% and 0.95%.

3. Process according to claim 1, **characterized in that** in the crushing stage c), irregular cuts are made of three differentiated sizes: from 1-2 mm, from 4-5 mm and from 5-6 mm.

4. Process according to claim 1, **characterized in that** the vegetable fat in step d) is Extra Virgin Olive Oil.

5. Process according to claim 1, **characterized in that** the case in step f) is selected from intestines of pig or sheep, or synthetic casing.

6. Process according to claim 1, **characterized in that** between 10 g and 14 g of sweet paprika for every 500 g of octopus heads is added to the mixture during step d).

7. Process according to claim 1, **characterized in that** between 3 g and 6 g of hot paprika and between 5 g and 9 g of sweet paprika for every 500 g of octopus heads are added to the mixture during step d).

8. Process according to claim 1, **characterized in that** between 6 g and 11 g of Sichuan pepper is added for every 500 g of octopus heads to the mixture during step d).

9. Process according to claim 1, **characterized in that** the product after step f) is unpasteurized.

10. Process according to claim 9, **characterized in that** the unpasteurized step consists of a cold treatment in a chamber at a temperature between 2.8°C and 3.1 ºC with a relative humidity of 60%± for at least 24-36 hours.

11. Process according to claim 1, **characterized in that** the product after step f) is pasteurized.

12. Process according to claim 11, **characterized in that** the pasteurization step is a treatment at 85°C ± 2°C for 1.5 to 2 hours and rapidly cooling at a temperature between 0°C and 3°C.

13. Process according to claim 1, **characterized in that** the product after step f) is cured.

14. Process according to claim 13, **characterized in that** the curing step consists of a cold treatment in a chamber between 7 days and 14 days with a variable temperature between - 2.8°C and -3.1°C and a relative humidity of 65% (±5%).

15. Process according to claim 1, **characterized in that** the product after step f) is smoked.

16. Process according to claim 15, **characterized in that** the smoking step consists of a cold smoking treatment at a temperature between 6°C and 15°C for 10-16 hours.

17. Marine sausage obtained according to the process of any of claims 1 to 16, **characterized in that** it presents the following composition, in weight of the final sausage: more than 90% of octopus' heads, salt, vegetable fat and *colatura di alici.*

18. Marine sausage according to claim 17 **characterized in that** it presents the following composition in weight of the final sausage: 94 - 97 % of octopus' heads, 1.5 - 2.3 % of vegetable fat; 1.5 - 2.3 % of *colatura di alici* and 0.4 - 0.95 % of salt.

19. Marine sausage according to claim 17, **characterized in that** it additionally presents one of the following ingredients: 1.6 - 2.4 % of sweet paprika, 0.6 - 1.2 % of hot paprika and 1.2 - 2.2 % of Sichuan pepper, the percentages in respect of the total weight of the final sausage.

## Patentansprüche

1. Verfahren zum Herstellen von Meereswürsten, **dadurch gekennzeichnet, dass** das Verfahren die folgenden Schritte umfasst:
a) Kochen von Krakenköpfen zwischen 40 und 60 Minuten;
b) Senken der Temperatur der gekochten Krakenköpfe zwischen 0 und 3 °C für 40 bis 60 Minuten;
c) Zerkleinern der Krakenköpfe aus Schritt b) bei einer Temperatur zwischen 0 °C und 4 °C;
d) Hinzufügen von Salz, Pflanzenfett und *Colatura di Alici* zu den zerkleinerten Köpfen und Vereinigen des Gemischs für 10 bis 30 Minuten bei einer Temperatur zwischen 0 °C und 4 °C;
e) Stabilisieren der vereinigten Masse aus Schritt d) bei einer Temperatur zwischen 0 °C und 4 °C für eine Zeit zwischen 10 und 14 Stunden; und
f) Füllen der vereinigten Masse aus Schritt e) in eine Hülle;
wobei die Menge an Krakenköpfen in der Meereswurst mehr als 90 Gew.-% der fertigen Wurst ausmacht.

2. Verfahren nach Anspruch 1, **dadurch gekennzeichnet, dass** die Inhaltsstoffe in Schritt d) aus 94 % bis 97 % Krakenköpfen, 1,5 % bis 2,3 % Pflanzenfett, 1,5 % bis 2,3 % *Colatura di Alici* und 0,4 % bis 0,95 % Salz bestehen.

3. Verfahren nach Anspruch 1, **dadurch gekennzeichnet, dass** in der Zerkleinerungsstufe c) unregelmäßige Schnitte in drei unterschiedlichen Größen vorgenommen werden: von 1-2 mm, von 4-5 mm und von 5-6 mm.

4. Verfahren nach Anspruch 1, **dadurch gekennzeichnet, dass** das Pflanzenfett in Schritt d) natives Olivenöl extra ist.

5. Verfahren nach Anspruch 1, **dadurch gekennzeichnet, dass** die Hülle in Schritt f) aus Därmen von Schweinen oder Schafen oder einer synthetischen Hülle ausgewählt wird.

6. Verfahren nach Anspruch 1, **dadurch gekennzeichnet, dass** zwischen 10 g und 14 g süßer Paprika pro 500 g Krakenköpfe während Schritt d) zu dem Gemisch hinzugefügt werden.

7. Verfahren nach Anspruch 1, **dadurch gekennzeichnet, dass** zwischen 3 g und 6 g scharfer Paprika und zwischen 5 g und 9 g süßer Paprika pro 500 g Krakenköpfe während Schritt d) zu dem Gemisch hinzugefügt werden.

8. Verfahren nach Anspruch 1, **dadurch gekennzeichnet, dass** zwischen 6 g und 11 g Sichuanpfeffer pro 500 g Krakenköpfe zu dem Gemisch während Schritt d) hinzugefügt werden.

9. Verfahren nach Anspruch 1, **dadurch gekennzeichnet, dass** das Produkt nach Schritt f) nicht pasteurisiert ist.

10. Verfahren nach Anspruch 9, **dadurch gekennzeichnet, dass** der nicht pasteurisierte Schritt aus einer Kältebehandlung in einer Kammer bei einer Temperatur zwischen 2,8 °C und 3,1 °C mit einer relativen Feuchtigkeit von 60 % ± für mindestens 24-36 Stunden besteht.

11. Verfahren nach Anspruch 1, **dadurch gekennzeichnet, dass** das Produkt nach Schritt f) pasteurisiert ist.

12. Verfahren nach Anspruch 11, **dadurch gekennzeichnet, dass** der Pasteurisierungsschritt eine Behandlung bei 85 °C ± 2 °C für 1,5 bis 2 Stunden und ein schnelles Kühlen auf eine Temperatur zwischen 0 °C und 3 °C ist.

13. Verfahren nach Anspruch 1, **dadurch gekennzeichnet, dass** das Produkt nach Schritt f) gepökelt ist.

14. Verfahren nach Anspruch 13, **dadurch gekennzeichnet, dass** der Pökelschritt aus einer Kältebehandlung in einer Kammer zwischen 7 Tagen und 14 Tagen bei einer variablen Temperatur zwischen -2,8 °C und -3,1 °C und einer relativen Feuchtigkeit von 65 % (±5 %) besteht.

15. Verfahren nach Anspruch 1, **dadurch gekennzeichnet, dass** das Produkt nach Schritt f) geräuchert ist.

16. Verfahren nach Anspruch 15, **dadurch gekennzeichnet, dass** der Räucherschritt aus einer Kalträucherungsbehandlung bei einer Temperatur zwischen 6 °C und 15 °C für 10 bis 16 Stunden besteht.

17. Meereswurst, erhalten gemäß dem Verfahren nach einem der Ansprüche 1 bis 16, **dadurch gekennzeichnet, dass** sie die folgende Zusammensetzung, in Gewicht der fertigen Wurst, aufweist: mehr als 90 % Krakenköpfe, Salz, Pflanzenfett und *Colatura di Alici.*

18. Meereswurst nach Anspruch 17, **dadurch gekennzeichnet, dass** sie die folgende Zusammensetzung in Gewicht der fertigen Wurst aufweist: 94-97 % Krakenköpfe, 1,5-2,3 % Pflanzenfett; 1,5-2,3 % *Colatura di Alici* und 0,4-0,95 % Salz.

19. Meereswurst nach Anspruch 17, **dadurch gekennzeichnet, dass** sie zusätzlich einen der folgenden Inhaltsstoffe aufweist: 1,6-2,4 % süßer Paprika, 0,6-1,2 % scharfer Paprika und 1,2-2,2 % Sichuanpfeffer, wobei die Prozentsätze jeweils auf das Gesamtgewicht der fertigen Wurst bezogen sind.

## Revendications

1. Procédé de préparation de saucisses marines **caractérisé en ce que** le procédé comprend les étapes suivantes :
a) cuisson de têtes de poulpe pendant entre 40 et 60 minutes ;
b) réduction de la température des têtes de poulpe cuites à entre 0 et 3°C pendant 40 à 60 minutes ;
c) écrasement les têtes de poulpe de l'étape b) à une température comprise entre 0°C et 4°C ;
d) ajout du sel, de la matière grasse végétale et de la *colatura di alici* aux têtes écrasées et amalgamation du mélange pendant entre 10 et 30 minutes à une température comprise entre 0°C et 4°C ;
e) stabilisation de la masse amalgamée de l'étape d) à une température comprise entre 0°C et 4°C pendant une durée comprise entre 10 et 14 heures ; et
f) farce de la mase amalgamée de l'étape e) dans un boyau ;
dans lequel la quantité de têtes de poulpe dans la saucisse marine est de plus de 90% en poids de la saucisse finale.

2. Procédé selon la revendication 1, **caractérisé en ce que** les ingrédients dans l'étape d) consistent en entre 94% et 97% de têtes de poulpe, entre 1,5% et 2,3% de matière grasse végétale, entre 1,5% et 2,3% de *colatura di alici,* et entre 0,4% et 0,95% de sel.

3. Procédé selon la revendication 1, **caractérisé en ce que**, dans l'étape d'écrasement c), des coupes irrégulières sont faites en trois tailles différenciées : de 1-2 mm, de 4-5 mm et de 5-6 mm.

4. Procédé selon la revendication 1, **caractérisé en ce que** la matière grasse végétale dans l'étape d) est de l'huile d'olive vierge extra.

5. Procédé selon la revendication 1, **caractérisé en ce que** le boyau dans l'étape f) est choisi parmi des intestins de porc ou de mouton, ou du boyau synthétique.

6. Procédé selon la revendication 1, **caractérisé en ce qu'**entre 10 g et 14 g de paprika sucré pour chaque 500 g de têtes de poulpe sont ajoutés au mélange pendant l'étape d).

7. Procédé selon la revendication 1, **caractérisé en ce qu'**entre 3 g et 6 g de paprika chaud et entre 5 g et 9 g de paprika sucré pour chaque 500 g de têtes de poulpe sont ajoutés au mélange pendant l'étape d).

8. Procédé selon la revendication 1, **caractérisé en ce qu'**entre 6 g et 11 g de poivre de Sichuan sont ajoutés pour chaque 500 g de têtes de poulpe au mélange pendant l'étape d).

9. Procédé selon la revendication 1, **caractérisé en ce que** le produit après l'étape f) est non pasteurisé.

10. Procédé selon la revendication 9, **caractérisé en ce que** l'étape non pasteurisée consiste en un traitement froid dans une chambre à une température comprise entre 2,8°C et 3,1°C avec une humidité relative de 60%± pendant au moins 24-36 heures.

11. Procédé selon la revendication 1, **caractérisé en ce que** le produit après l'étape f) est pasteurisé.

12. Procédé selon la revendication 11, **caractérisé en ce que** l'étape de pasteurisation est un traitement à 85°C ± 2°C pendant 1,5 à 2 heures et un refroidissement rapide à une température comprise entre 0°C et 3°C.

13. Procédé selon la revendication 1, **caractérisé en ce que** le produit après l'étape f) est séché.

14. Procédé selon la revendication 13, **caractérisé en ce que** l'étape de séchage consiste en un traitement froid dans une chambre pendant entre 7 jours et 14 jours avec une température variable comprise entre - 2,8°C et -3,1 °C et une humidité relative de 65% (±5%).

15. Procédé selon la revendication 1, **caractérisé en ce que** le produit après l'étape f) est fumé.

16. Procédé selon la revendication 15, **caractérisé en ce que** l'étape de fumage consiste en un traitement de fumage froid à une température comprise entre 6°C et 15°C pendant 10-16 heures.

17. Saucisse marine obtenue selon le procédé selon l'une quelconque des revendications 1 à 16, **caractérisée en ce qu'**elle présente la composition suivante, en poids de la saucisse finale : plus de 90% de têtes de poulpe, du sel, de la matière grasse végétale et de la *colatura di alici.*

18. Saucisse marine selon la revendication 17, **caractérisée en ce qu'**elle présente la composition suivante en poids de la saucisse finale : 94 - 97% de têtes de poulpe, 1,5 - 2,3% de matière grasse végétale ; 1,5 - 2,3% de *colatura di alici* et 0,4 - 0,95% de sel.

19. Saucisse marine selon la revendication 17, **caractérisée en ce qu'**elle présente en outre les ingrédients suivants : 1,6 - 2,4% de paprika sucré, 0,6 - 1,2% de paprika chaud et 1,2 - 2,2% de poivre de Sichuan, les pourcentages étant par rapport au poids total de la saucisse finale.
